# EUROPÄISCHE PATENTSCHRIFT

(11) **EP 2 303 569 B1**
(45) Veröffentlichungstag und Bekanntmachung des Hinweises auf die Patenterteilung: **08.07.2020**
(21) Anmeldenummer: 09780533.7
(22) Anmeldetag: 14.07.2009
(51) Int. Cl.: B32B 5/18, D06N 3/08, C14C 11/00, C09D 175/04, B32B 27/40, B32B 27/06, B32B 3/26, C08G 18/08, B32B 5/02, B32B 5/20, B32B 7/12, B32B 9/02, B32B 15/20, B32B 23/04, B32B 27/28, B32B 27/30, B32B 27/32, B32B 27/34, B32B 27/36, B32B 9/00, B32B 29/00

(54) **VERFAHREN ZUR KONTINUIERLICHEN HERSTELLUNG VON MEHRSCHICHTIGEN VERBUNDKÖRPERN**
METHOD FOR CONTINUOUSLY PRODUCING MULTI-LAYERED COMPOSITE BODIES
PROCÉDÉ DE FABRICATION CONTINUE DE CORPS COMPOSITES MULTICOUCHES

(30) Priorität: 17.07.2008 EP 08160655
(43) Veröffentlichungstag der Anmeldung: 06.04.2011
(73) Patentinhaber: BASF SE, 67056 Ludwigshafen am Rhein (DE)
(72) Erfinder: JOKISCH, Carl, 68259 Mannheim (DE); WEISER, Jürgen, 69198 Schriesheim (DE)
(74) Vertreter: BASF IP Association
(86) Internationale Anmeldenummer: PCT/EP2009/058950
(87) Internationale Veröffentlichungsnummer: WO 2010/007042

(56) Entgegenhaltungen:
- WO-A-2005/047549
- DD-A3- 237 082
- DE-U1-202004 014 107
- DE-U1-202008 002 503
- DE-U1-202008 004 906

## Beschreibung

Die vorliegende Erfindung betrifft ein Verfahren zur kontinuierlichen Herstellung von mehrschichtigen Verbundkörpern, umfassend
(A) mindestens ein Trägermaterial,
(B) mindestens eine Verbindungsschicht und
(C) mindestens eine Polyurethanschicht, die Kapillaren aufweist, die über die gesamte Dicke der Polyurethanschicht gehen,
dadurch gekennzeichnet, dass man mit Hilfe einer Matrize Polyurethanschicht (C) herstellt und diese Polyurethanschicht (C) mit Hilfe eines Materials, das sich zu Verbindungsschicht (B) umwandelt, auf dem Trägermaterial (A) fixiert, wobei die Matrize eine Temperatur im Bereich von 80 bis 170°C aufweist und einen Wärmeträger mit einer Wärmekapazität im Bereich von 100 bis 20.000 J/K·m² hat und wobei die Matrize als Endlos-Band ausgebildet ist, welches über Rollen an verschiedenen Apparateteilen vorbeigeführt wird, an denen die betreffenden Arbeitsschritte durchgeführt werden.

Mehrschichtige Verbundkörper, beispielsweise beschichtetes Leder, beschichtetes Textil oder beschichtete Zellulosefaser-haltige Produkte, erfreuen sich wachsender Beliebtheit. Insbesondere mit Polyurethan beschichtete Verbundkörper, wie sie beispielsweise in WO 2005/047549 beschrieben sind, haben aufgrund der Kombination von zahlreichen recht unterschiedlichen Eigenschaften ein breites Anwendungsgebiet. Sie vereinen die mechanischen Eigenschaften von Leder mit Atmungsaktivität, einem gefälligen Aussehen und einem angenehmen Griff (Haptik).

Es fehlen jedoch bisher Verfahren, die erlauben, derartige Verbundkörper kostengünstig herzustellen. Bisher offenbarte Verfahren produzieren in der Regel stückweise oder diskontinuierlich und erfordern hohen manuellen Arbeitsaufwand.

Es bestand daher die Aufgabe, ein Verfahren bereit zu stellen, durch welches mehrschichtige Verbundkörper kostengünstig hergestellt werden können.

Demgemäß wurde das eingangs definierte Verfahren gefunden.

Erfindungsgemäß hergestellte Verbundkörper sind in einer Ausführungsform der vorliegenden Erfindung atmungsaktiv. In einer anderen Ausführungsform der vorliegenden Erfindung sind erfindungsgemäß hergestellte Verbundkörper nicht atmungsaktiv.

Erfindungsgemäß hergestellte Verbundkörper umfassen (A) mindestens ein Trägermaterial.

Als Trägermaterial (A) kommen verschiedenste Materialien in Frage, beispielsweise

Textil, cellulosehaltige Materialien wie Papier und Pappe und vorzugsweise Leder, im Folgenden auch jeweils als Textil (A), cellulosehaltiges Material (A) bzw. Leder (A) bezeichnet. Aber auch Kunstleder, Folien, insbesondere Metall- oder Polymerfolien, und Polyurethan sind geeignet, insbesondere thermoplastisches Polyurethan, beispielsweise als Schaum. Trägermaterial (A) ist in einer Ausführungsform nicht atmungsaktiv. In einer bevorzugten Ausführungsform der vorliegenden Erfindung wählt man Trägermaterial (A) aus atmungsaktiven Materialien.

Textil (A) oder Textilien (A) können verschiedene Erscheinungsformen aufweisen. Geeignet sind beispielsweise Gewebe, Filz, Gestricke (Strickwaren), Gewirke, Watten, Gelege und Mikrofasergewebe, weiterhin Vliesstoffe (Non-wovens).

Vorzugsweise handelt es sich bei Textil (A) um Vliesstoffe, Gewebe, Gewirke oder Gestricke.

Textil (A) kann gewählt werden aus Leinen, Schnüren, Seilen, Garnen oder Zwirnen. Textil (A) kann natürlichen Ursprungs sein, beispielsweise Baumwolle, Wolle oder Flachs, oder synthetisch, beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, olyvinylchlorid, weiterhin Polyestermikrofasern und Glasfasergewebe. Ganz besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe.

Textil (A) kann unbehandelt sein oder behandelt, beispielsweise gebleicht oder gefärbt. Vorzugsweise ist Textil auf nur einer Seite beschichtet oder nicht beschichtet.

Textil (A) kann ausgerüstet sein, insbesondere ist Textil (A) pflegeleicht und/oder flammfest ausgerüstet.

Textil (A) kann ein Flächengewicht im Bereich von 10 bis 500 g/m² aufweisen, bevorzugt sind 50 bis 300 g/cm².

Bei cellulosehaltigem Material (A) kann es sich um verschiedene Arten von cellulosehaltigen Materialien handeln. Dabei schließt im Rahmen der vorliegenden Erfindung der Begriff Cellulose auch Hemicellulose und Lignocellulose mit ein.

Beispielsweise kann es sich bei cellulosehaltigem Material (A) um Holz oder Spanplatten handeln. Bei Holz kann es sich beispielsweise um lackiertes oder unlackiertes Holz handeln, und Holz im Sinne der vorliegenden Erfindung kann biozid ausgerüstet sein. Auch Furnier gehört zu Holz im Rahmen der vorliegenden Erfindung.

In einer Ausführungsform der vorliegenden Erfindung kann es sich bei cellulosehaltigem Material (A) um ein Kompositmaterial (Verbundwerkstoff) aus natürlichen Fasern und Kunststoff handeln, der auf englisch auch als Wood Plastic Composite oder allgemein kurz als WPC bezeichnet wird.

Vorzugsweise kann es sich bei cellulosehaltigem Material (A) um Pappe, Kartonagen oder Papier handeln. Papier im Sinne der vorliegenden Anmeldung kann unbeschichtet oder vorzugsweise beschichtet oder nach an sich bekannten Methoden ausgerüstet sein. Insbesondere kann es sich bei Papier um gebleichtes Papier handeln. Papier kann ein oder mehrere Pigmente enthalten, beispielsweise Kreide, Kaolin oder TiO₂, und Papier, Pappe oder Kartonagen können ungefärbt (naturfarben) oder farbig sein. Papier, Pappe und Kartonagen im Sinne der vorliegenden Anmeldungen können unbedruckt oder bedruckt sein.

In einer Ausführungsform der vorliegenden Erfindung handelt es sich bei Papier (A) um Kraftpapier.

In einer Ausführungsform der vorliegenden Erfindung kann es sich bei Papier (A) um mit Polyacrylat-Dispersion ausgerüstetes Papier handeln.

In einer Ausführungsform der vorliegenden Erfindung handelt es sich bei Trägermaterial (A) um Kunststoff- oder Metallfolien, kurz auch Folien (A) genannt.

Unter Folien (A) versteht man im Rahmen der vorliegenden Erfindung Flächengebilde aus Metall oder einem natürlichen oder vorzugsweise synthetischen Polymer, die eine Dicke von 0,5 µm bis 1 mm, vorzugsweise 1 µm bis 0,5 mm und besonders bevorzugt bis 0,15 mm aufweisen können. Kunststoff- und Metallfolien (A) werden im Rahmen der vorliegenden Erfindung auch unter dem Begriff Folien (A) subsumiert.

Vorzugsweise ist Folie (A) manuell, das heißt ohne Zuhilfenahme eines Werkzeugs, biegbar.

Unter Metallen sind Silber, Gold, Eisen, Kupfer, Zinn und insbesondere Aluminium bevorzugt.

Unter Polymeren sind Polyolefine wie Polyolefine wie Polyethylen und Polypropylen, weiterhin Polyester, Polyamid, Polycarbonat, Polyvinylchlorid, Polyurethan, Polymethylmethacrylat und Polystyrol bevorzugt, wobei unter Polyolefinen wie Polyethylen und Polypropylen nicht nur die betreffenden Ethylen- und Propylenhomopolymere, sondern auch Copolymere mit anderen Olefinen wie beispielsweise Acrylsäure oder 1-Olefinen zu verstehen sind. So sind unter Polyethylen insbesondere Ethylencopolymere mit 0,1 bis unter 50 Gew.-% eines oder mehrerer 1-Olefine wie Propylen, 1-Buten, 1-Penten, 1-Hexen, 1-Octen, 1-Decen oder 1-Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Nylon 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Unter Folien aus Polyurethan sind solche aus thermoplastischem Polyurethan, so genannte TPU-Folien, bevorzugt.

Folien (A) können auch Verbundfolien umfassen, beispielsweise Folien, die eine der vorstehend genannten Folien und eine Metallfolie oder Papier umfassen.

In einer Ausführungsform der vorliegenden Erfindung handelt es sich bei Trägermaterial (A) um Leder. Der Begriff Leder umfasst im Rahmen der vorliegenden Erfindung gegerbte Tierhäute, die zugerichtet oder vorzugsweise nicht zugerichtet sein können. Das Gerben kann nach verschiedensten Methoden erfolgen, beispielsweise mit Chromgerbstoffen, anderen mineralischen Gerbstoffen wie beispielsweise Aluminiumverbindungen oder Zirkonverbindungen, mit Polymergerbstoffen, beispielsweise Homo- oder Copolymeren der (Meth)acrylsäure, mit Aldehyden, insbesondere mit Glutardialdehyd, mit synthetischen Gerbstoffen wie beispielsweise Kondensationsprodukten von aromatischen Sulfonsäuren mit Aldehyden, insbesondere mit Formaldehyd, oder mit anderen Carbonylgruppen-haltigen Verbindungen wie beispielsweise Kondensationsprodukten von aromatischen Sulfonsäuren mit Harnstoff. Weitere geeignete Leder sind solche, die mit vegetabilen Gerbstoffen und/oder enzymatisch gegerbt sind. Auch Leder, die mit einer Mischung aus zwei oder mehr der vorstehend genannten Gerbstoffe gegerbt sind, sind geeignet.

Leder im Sinne der vorliegenden Erfindung kann weiterhin einen oder mehrere der an sich bekannten Arbeitsschritte durchlaufen haben, beispielsweise Hydrophobieren, Fetten, Nachgerben und Färben.

Leder (A) kann beispielsweise aus Häuten von Rindern, Schweinen, Ziegen, Schafen, Fischen, Schlangen, Wildtieren oder Vögeln hergestellt sein.

Leder (A) kann eine Dicke im Bereich von 0,2 bis 2 mm aufweisen. Vorzugsweise handelt es sich um Narbenleder. Leder kann frei von Rohhautfehlern sein, aber auch solches Leder, das Rohhautfehler aufweist, die beispielsweise von Verletzungen durch Stacheldraht, Kämpfen zwischen Tieren oder Insektenstiche herrühren, sind geeignet.

In einer Ausführungsform der vorliegenden Erfindung handelt es sich bei Leder (A) um Spalt bzw. Spaltleder.

In einer Ausführungsform der vorliegenden Erfindung handelt es sich bei Leder (A) um Veloursleder bzw. Spaltvelours.

In einer Ausführungsform der vorliegenden Erfindung handelt es sich bei Träger (A) um Kunstleder, kurz auch Kunstleder (A) genannt. Unter Kunstleder werden im Rahmen der vorliegenden Erfindung auch Vorstufen für Kunstleder mit umfasst, und zwar solche, bei denen die oberste Schicht, das heißt eine oder die Deckschicht, fehlt. Bei Kunstleder (A) handelt es sich im Rahmen der vorliegenden Erfindung um mit Kunststoff beschichtete vorzugsweise textile Flächengebilde mit oder ohne Deckschicht, wobei die Deckschicht, so sie vorhanden ist, ein lederähnliches Aussehen hat. Beispiele für Kunstleder (A) sind Gewebekunstleder, Vlieskunstleder, Faserkunstleder, Folienkunstleder und Schaumkunstleder. Auch Erzeugnisse mit zwei Deckschichten wie beispielsweise Vlieskunstleder fallen unter den Begriff Kunstleder (A). Besonders bevorzugte Kunstleder (A) sind atmungsaktive Kunstleder auf Polyurethanbasis, wie sie z.B. beschrieben sind in Harro Träubel, New Materials Permeable to Water Vapor, Springer Verlag 1999. Weiterhin bevorzugt sind Trägermaterialien, bei denen ein offenzelliger Polyurethanschaum auf einen textilen Träger aufgebracht wird, z.B. als Schlagschaum oder durch direkte Hinterschäumung.

In einer Ausführungsform der vorliegenden Erfindung wählt man Trägermaterial (A) aus Leder, Kunstleder, Metall- oder Kunststofffolien, Textil und zellulosehaltigen Materialien.

In einer Ausführungsform der vorliegenden Erfindung handelt es sich bei Trägermaterial (A) um solches, welches zu Beginn des erfindungsgemäßen Herstellungsverfahrens von Speichern genommen wird, beispielsweise von Stapeln oder insbesondere kontinuierlich von einer oder mehreren Rollen.

Erfindungsgemäß hergestellte Verbundkörper weisen weiterhin mindestens eine Verbindungsschicht (B) auf. Bei Verbindungsschicht (B) kann es sich um eine durchbrochene, das heißt nicht vollflächig, ausgeprägte Schicht handeln, oder um eine vollflächig aufgetragene Schicht. Vorzugsweise handelt es sich bei Verbindungsschicht (B) um eine Schicht eines gehärteten organischen Klebstoffs. Verbindungsschicht (B) wird gebildet durch ein Material, das sich zu Verbindungsschicht (B) umwandelt.

In einer Ausführungsform der vorliegenden Erfindung handelt es sich bei Verbindungsschicht (B) um eine punktförmig, streifenförmig oder gitterförmig, beispielsweise in Form von Rauten, Rechtecken, Quadraten oder einer Bienenwabenstruktur aufgebrachte Schicht. Dann kommt Polyurethanschicht (C) mit Trägermaterial (A) an den Lücken der Verbindungsschicht (B) in Berührung.

In einer Ausführungsform der vorliegenden Erfindung handelt es sich bei Verbindungsschicht (B) um eine Schicht eines gehärteten organischen Klebstoffs, beispielsweise auf Basis von Polyvinylacetat, Polyacrylat oder insbesondere Polyurethan, vorzugsweise von Polyurethanen mit einer Glastemperatur unter 0°C.

Dabei kann die Härtung des organischen Klebstoffs beispielsweise thermisch, durch aktinische Strahlung oder durch Altern erfolgt sein.

In einer anderen Ausführungsform der vorliegenden Erfindung handelt es sich bei Verbindungsschicht (B) um ein Klebenetz.

In einer Ausführungsform der vorliegenden Erfindung weist Verbindungsschicht (B) eine maximale Dicke von 100 µm, bevorzugt 50 µm, besonders bevorzugt 30 µm, ganz besonders bevorzugt 15 µm auf.

In einer Ausführungsform der vorliegenden Erfindung kann Verbindungsschicht (B) Mikrohohlkugeln enthalten. Unter Mikrohohlkugeln sind im Rahmen der vorliegenden Erfindung kugelförmige Partikel mit einem mittleren Durchmesser im Bereich von 5 bis 20 µm aus polymerem Material, insbesondre aus halogeniertem Polymer wie beispielsweise Polyvinylchlorid oder Polyvinylidenchlorid oder Copolymer von Vinylchlorid mit Vinylidenchlorid, zu verstehen. Mikrohohlkugeln können leer sein oder vorzugsweise gefüllt mit einer Substanz, deren Siedepunkt geringfügig tiefer liegt als die Zimmertemperatur, beispielsweise mit n-Butan und insbesondere mit Isobutan. In einer Variante der vorliegenden Erfindung sind Mikrohohlkugeln mit Isopentan gefüllt.

In einer Ausführungsform der vorliegenden Erfindung kann Polyurethanschicht (C) mit Trägermaterial (A) über mindestens zwei Verbindungsschichten (B) verbunden sein, die eine gleiche oder unterschiedliche Zusammensetzung aufweisen. So kann die eine Verbindungsschicht (B) ein Pigment enthalten und die andere Verbindungsschicht (B) pigmentfrei sein.

In einer Variante kann die eine Verbindungsschicht (B) Mikrohohlkugeln enthalten und die andere Verbindungsschicht (B) nicht.

Das erfindungsgemäße Verfahren zur kontinuierlichen Herstellung von mehrschichtigen Verbundmaterialien, im Rahmen der vorliegenden Erfindung auch als erfindungsgemäßes Verfahren bezeichnet, wird im Folgenden näher beschrieben.

Zur Durchführung des erfindungsgemäßen Verfahrens kann man sich verschiedenartigster Vorrichtungen bedienen, die eine kontinuierliche Bearbeitung von Verbundkörpern erlauben und die die Durchführung von verschiedenartigen Arbeitsgängen an verschiedenen Stellen der betreffenden Vorrichtung erlauben.

Zur Durchführung des erfindungsgemäßen Verfahrens geht man so vor, dass man mit Hilfe einer Matrize Polyurethanschicht (C) herstellt und diese Polyurethanschicht (C) mit Hilfe eines Materials, das sich zu Verbindungsschicht (B) umwandelt, auf dem Trägermaterial fixiert, wobei die Matrize eine Temperatur im Bereich von 80 bis 170°C aufweist und einen Wärmeträger mit einer Wärmekapazität im Bereich von 100 bis 20.000 J/K·m² umfasst. Dabei erfolgt vorzugsweise das Fixieren oder das Aufbringen von Material, das sich zu Verbindungsschicht (B) umwandelt, kontinuierlich. Besonders bevorzugt erfolgen beide letztgenannten Schritte kontinuierlich.

Dabei kann man Polyurethanschicht (C) mit Hilfe von mindestens einer Formulierung von mindestens einem Polyurethan herstellen. Als Formulierungen sind wässrige Emulsionen, Dispersionen oder Lösungen bevorzugt, aber auch Lösungen oder Dispersionen in hinreichend flüchtigen organischen Lösungsmitteln sind geeignet. Bevorzugt sind Formulierungen in nicht brennbarem Medium, insbesondere in Wasser.

Die Matrize weist eine Temperatur im Bereich von 80 bis 170°C, bevorzugt 85 bis 130 und besonders bevorzugt bis 110°C auf. Bei der Temperatur handelt es sich jeweils um die Oberflächentemperatur zu Beginn des Aufbringens von Polyurethanfilm (C). Vorzugsweise liegt die Oberflächentemperatur auch am Ende des Aushärtens von Polyurethan zu Polyurethanschicht (C) im Bereich oberhalb von über 60°C.

Die Matrize hat eine Wärmekapazität im Bereich von 100 bis 20.000 J/K·m², bevorzugt 500 bis 15.000 J/K·m². Dabei betreffen Quadratmeter jeweils die Oberfläche der Matrize. Die Wärmekapazität ist dabei die Wärmemenge, die erforderlich ist, um einen Quadratmeter Matrize an der Oberfläche um ein Kelvin zu erwärmen.

In einer Ausführungsform der vorliegenden Erfindung umfasst die Matrize zusätzlich einen Wärmeträger. Der oder die Wärmeträger ist bzw. sind geeignet, eine hinreichend hohe Temperatur der Matrize aufrecht zu erhalten, so dass Wasser und/oder organische(s) Lösungsmittel hinreichend schnell verdampfen, während man Polyurethanschicht (C) herstellt. In den Ausführungsformen, in denen die Matrize einen Wärmeträger umfassen, sind die Werte für die Wärmekapazität auf die Kombination aus eigentlicher Matrize und Wärmeträger bezogen.

Beispielsweise kann es sich bei dem Wärmeträger um einen geheizten oder heizbaren Metallkörper handeln, beispielsweise in Form eines Bandes oder in Form einer oder mehrerer Platten oder Barren, die miteinander verbunden sein können, oder in Form eines Gitters oder in Form von verbundenen Ringen, wie sie einem Kettenhemd ähneln. Geheizte Metallkörper können beispielsweise geheizt werden mit elektrischem Strom, mit Wasserdampf mit einer Temperatur oberhalb von 110°C oder vorzugsweise mit Heißdampf, das heißt Wasserdampf mit einer Temperatur im Bereich von 300 bis 400°C. Derartige geheizte Metallkörper können kontinuierlich geheizt werden oder semikontinuierlich, d.h. Heizmedium wird dann zugeführt, wenn eine bestimmte Mindesttemperatur unterschritten ist, und nach dem Überschreiten einer gewissen Höchsttemperatur wird die Zufuhr von Heizmedium wieder unterbrochen.

In einer anderen Ausführungsform der vorliegenden Erfindung wählt man Wärmeträger aus Metallkörpern mit hoher Wärmekapazität, insbesondere im Bereich von 100 bis 20.000 J/K·m², beispielsweise Metallplatten. Derartige Metallplatten werden an einer Stelle der zur Durchführung des erfindungsgemäßen Verfahrens eingesetzten Vorrichtung aufgeheizt und an anderer Stelle zur Herstellung von Polyurethanfilm (C) eingesetzt.

In einer anderen Ausführungsform der vorliegenden Erfindung handelt es sich bei dem Wärmeträger um Metall, welches in eine Matrize integriert ist. Beispiele sind Metallfolien, flexible Metallgitter nach Art eines Metallnetzes, weiterhin Metallstäbe, Waben oder Metallwolle, bevorzugt sind beheizbare Metalldrähte.

In einer Ausführungsform der vorliegenden Erfindung handelt es sich beim Wärmeträger um einen elektrisch beheizten Draht oder eine Kombination von elektrisch beheizten Drähten, der bzw. die in die eigentliche Matrize integriert ist bzw. sind. Die Kombination von elektrisch beheizten Drähten kann beispielsweise mehrere Spiralen beinhalten.

In einer anderen Ausführungsform der vorliegenden Erfindung handelt es sich bei der Matrize um eine Silikonmatrize, mit einer besonders hohen Dicke, beispielsweise im Bereich von 0,5 cm bis2 cm, bevorzugt bis 1 cm. Derartig dicke Matrizen und insbesondere derart dicke Silikonmatrizen weisen selbst eine besonders hohe Wärmekapazität auf und sind in der betreffenden Ausführungsform der Wärmeträger.

In einer anderen Ausführungsform der vorliegenden Erfindung handelt es sich bei der Matrize um ein mit Silikon überzogenes Material, beispielsweise Metall, insbesondere Stahl oder Aluminium.

In einer Ausführungsform der vorliegenden Erfindung handelt es sich bei der Matrize um eine Matrize, insbesondere Silikonmatrize, mit einer besonders hohen Dicke, wobei die betreffende Matrize und insbesondere die betreffende Silikonmatrize mit mindestens einem Material dotiert ist, das selbst eine hohe Wärmekapazität aufweist, beispielsweise Graphit, Öle, Wachse, insbesondere Paraffinwachse, und Latentwärmespeicher, insbesondere verkapselte Latentwärmespeicher, wie sie beispielsweise in WO 2004/092299 offenbart sind.

In einer Ausführungsform der vorliegenden Erfindung verwendet man eine Silikonmatrize, die während der Durchführung des Verfahrens kontinuierlich oder diskontinuierlich mit Mikrowellen beheizt wird.

Die Matrize ist als Endlos-Band ausgebildet, welches über Rollen an verschiedenen Apparateteilen vorbeigeführt wird, an denen die betreffenden Arbeitsschritte durchgeführt werden. Als Apparateteile sind beispielsweise Sprühdüsen, Sprühpistolen, Kalander, halbkontinuierlich arbeitende Pressen und insbesondere Rollenpressen, weiterhin Lichtquellen, Wärmevorrichtungen und Trocknungsvorrichtungen wie beispielsweise Öfen oder Ventilatoren zu nennen.

In einer anderen Ausführungsform der vorliegenden Erfindung ist die Matrize als Matrize ausgebildet, die auf eine Metallrolle oder Metalltrommel aufgebracht ist, und zwar "nahtlos", das heißt mit möglichst geringer Naht zwischen dem Anfang und dem Ende der Matrize. Dadurch kann die gesamte Länge der Matrize genutzt werden.

In einer Ausführungsform der vorliegenden Erfindung handelt es sich bei der Matrize um eine Matrize, die einen Wärmeträger mit einer Wärmekapazität im Bereich von 100 bis 20.000 J/K·m² umfasst. In einer Ausführungsform des erfindungsgemäßen Herstellungsverfahrens geht man so vor, dass man mit Hilfe einer Matrize eine Polyurethanschicht (C) bildet, mindestens einen organischen Klebstoff vollflächig oder partiell auf Trägermaterial (A) und/oder auf Polyurethanschicht (C) aufbringt und dann Polyurethanschicht (C) mit Trägermaterial (A) punktförmig, streifenartig oder flächig verbindet. Der von der Matrize umfasste Wärmeträger stellt sicher, dass die Matrize während der gesamten Zeit, in der man organischen Klebstoff auf Polyurethanschicht (C) aufbringt, eine ausreichend hohe Temperatur aufweist.

In einer Ausführungsform des erfindungsgemäßen Herstellungsverfahrens geht man so vor, dass man zunächst einen Polyurethanfilm (C) bereitstellt, mindestens ein Trägermaterial (A) oder den Polyurethanfilm (C) oder beides auf je einer Fläche teilweise, beispielsweise musterförmig, mit organischem Klebstoff versieht, beispielsweise bestreicht oder besprüht, und dann die beiden Flächen miteinander in Kontakt bringt. Danach kann man noch das so erhältliche System aneinanderpressen oder thermisch behandeln oder unter Erwärmen aneinanderpressen. Zum Aneinanderpressen kann man beispielsweise ein System von gegenläufig rotierenden Rollen einsetzen.

Polyurethanfilm (C) bildet die spätere Polyurethanschicht (C) des erfindungsgemäß hergestellten mehrschichtigen Verbundmaterials. Polyurethanfilm (C) kann man wie folgt herstellen.

Man bringt eine vorzugsweise wässrige Polyurethan-Dispersion auf eine Matrize auf, die mittels Wärmeträger vorgewärmt ist, lässt flüssige Phase, vorzugsweise das Wasser verdunsten und überführt danach den sich so bildenden Polyurethanfilm (C) auf Trägermaterial (A).

Das Aufbringen von vorzugsweise wässriger Polyurethan-Dispersion auf die Matrize kann nach an sich bekannten Methoden erfolgen, insbesondere durch kontinuierliches Aufsprühen, beispielsweise mit einer Sprühpistole.

Die Matrize kann eine glatte Oberfläche aufweisen, vorzugsweise ist sie jedoch strukturiert.

Die Strukturierung der Matrize kann man beispielsweise durch Lasergravur erzeugen oder durch Abformen. Die Strukturierung kann beispielsweise einem Muster entsprechen. Besonders bevorzugt entspricht die Strukturierung dem Negativ eines Narbenmusters von Leder oder dem Negativ eines Nubuck. Andere besonders bevorzugte Strukturierungen entsprechen Oberflächen von Holz, technische Oberflächen wie beispielsweise einer Carbonoptik, wobei auch 3D-Effekte mit umfasst sind. Die Strukturierungen können zusätzlich zu der eigentlichen Strukturierung auch bildhafte Designs, Namenszüge, Familienwappen oder ein oder mehrere Firmenlogos umfassen.

In einer Ausführungsform der vorliegenden Erfindung stellt man eine Matrize bereit, die eine elastomere Schicht oder einen Schichtverbund aufweist, umfassend eine elastomere Schicht auf einem Träger, wobei die elastomere Schicht ein Bindemittel sowie gegebenenfalls weitere Zusatz- und Hilfsstoffe umfasst. Die Bereitstellung der Matrize kann dann die folgenden Schritte umfassen:
1) Aufbringen eines flüssigen Bindemittels, das gegebenenfalls Zusatz- und/oder Hilfsstoffe enthält, auf eine gemusterte Oberfläche, beispielsweise eine Patrize oder ein Originalmuster,
2) Aushärten des Bindemittels, beispielsweise durch thermisches Aushärten, Strahlungshärtung oder durch Alternlassen,
3) Trennen des so erhältlichen strukturierten Mediums und gegebenenfalls Aufbringen auf einen Träger, beispielsweise eine Metallplatte oder einen Metallzylinder,
4) gegebenenfalls Verbinden von mehreren so erhältlichen kleineren Matrizen zu einer größeren Matrize, insbesondere zu einem Silikonband.

In einer Ausführungsform der vorliegenden Erfindung geht man so vor, dass man ein flüssiges Silikon auf ein Muster aufgibt, das Silikon altern und somit zu einer Silikonfolie aushärten lässt und dann abzieht. Die Silikonfolie wird dann auf einen Träger geklebt, beispielsweise eine Metallplatte, einen Metallzylinder oder eine Metallfolie.

In einer Ausführungsform der vorliegenden Erfindung handelt es sch bei der Matrize um eine Matrize, die einen Wärmeträger mit einer Wärmekapazität im Bereich von 100 bis 20.000 J/K·m² umfasst, besonders bevorzugt ist eine Silikonmatrize.

In einer bevorzugten Ausführungsform der vorliegenden Erfindung stellt man eine Matrize bereit, die eine lasergravierbare Schicht oder einen Schichtverbund aufweist, umfassend eine lasergravierbare Schicht auf einem Träger, wobei die lasergravierbare Schicht ein Bindemittel sowie gegebenenfalls weitere Zusatz- und Hilfsstoffe umfasst. Die lasergravierbare Schicht ist vorzugsweise außerdem elastomer.

In einer bevorzugten Ausführungsform umfasst die Bereitstellung einer Matrize die folgenden Schritte:
1) Bereitstellen einer lasergravierbaren Schicht oder eines Schichtverbunds, umfassend eine lasergravierbare Schicht auf einem Träger, wobei die lasergravierbare Schicht ein Bindemittel sowie vorzugsweise Zusatz- und Hilfsstoffe umfasst,
2) thermochemische, photochemische oder aktinische Verstärkung der lasergravierbaren Schicht,
3) Eingravieren einer der Oberflächenstruktur der oberflächenstrukturierten Beschichtung entsprechenden Oberflächenstruktur in die lasergravierbare Schicht mit einem Laser,
4) optional nahtloses Verbinden der Enden der lasergravierten Schicht.

Anstatt die Enden der lasergravierten Schicht miteinander zu verbinden, ist es auch möglich, in einem alternativen Schritt 4a) mehrere Matrizen bzw. Teilstücke von Matrizen miteinander zu einer großen Matrize zu verbinden.

Die lasergravierbare Schicht, die vorzugsweise elastomer ist, oder der Schichtverbund können vorzugsweise auf einem Träger vorliegen. Beispiele für geeignete Träger umfassen Gewebe und Folien aus Polyethylenterephthalat (PET), Polyethylennaphthalat (PEN), Polybutylenterephthalat (PBT), Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder anderen Eisenlegierungen.

In einer Ausführungsform der vorliegenden Erfindung kann der Träger zur besseren Haftung der lasergravierbaren Schicht mit einer Haftschicht beschichtet sein. In einer anderen Ausführungsform der vorliegenden Erfindung ist keine Haftschicht erforderlich.

Die lasergravierbare Schicht umfasst mindestens ein Bindemittel, das ein Präpolymer sein kann, welches im Zuge einer thermochemischen Verstärkung zu einem Polymer reagiert. Geeignete Bindemittel kann man je nach den gewünschten Eigenschaften der lasergravierbaren Schicht bzw. der Matrize, beispielsweise im Hinblick auf Härte, Elastizität oder Flexibilität, auswählen. Beispiele für geeignete Bindemittel lassen sich im Wesentlichen in 3 Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3-Dien-Monomere wie Isopren oder 1,3-Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Copolymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z.B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren. Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton® im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex® erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR¹)O-, -Si(R¹R²)O-, -OH, -NH₂, -NHR¹, -COOH, -COOR¹, -COHN₂, -O-C(O)NHR¹, -SO₃H oder -CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplatisch elastomere Polyester. Dabei sind R¹ und - so vorhanden - R² verschieden oder vorzugsweise gleich und gewählt aus organischen Gruppen und insbesondere C₁-C₆-Alkyl.

In einer Ausführungsform der vorliegenden Erfindung kann man Bindemittel einsetzen, die sowohl über ethylenisch ungesättigte Gruppen als auch über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere bzw. Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke.

Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Man kann auch Gemische zweier oder mehrerer Bindemittel einsetzen, wobei es sich dabei sowohl um Bindemittel aus jeweils nur einer der geschilderten Gruppen handeln kann oder um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

In einer Ausführungsform der vorliegenden Erfindung beträgt der Anteil des oder der Bindemittel in der elastomeren Schicht bzw. der betreffenden lasergravierbaren Schicht 30 Gew.-% bis 99 Gew.-% bezüglich der Summe aller Bestandteile der betreffenden elastomeren Schicht bzw. der betreffenden lasergravierbaren Schicht, bevorzugt 40 bis 95 Gew.-%, und ganz besonders bevorzugt 50 bis 90 Gew.-%.

In einer Ausführungsform der vorliegenden Erfindung bildet man Polyurethanschicht (C) mit Hilfe einer Silikonmatrize. Unter Silikonmatrizen werden im Rahmen der vorliegenden solche Matrizen verstanden, zu deren Herstellung mindestens ein Bindemittel eingesetzt wird, das mindestens eine, bevorzugt mindestens drei O-Si(R¹R²)-O-Gruppen pro Molekül aufweist, wobei die Variablen wie vorstehend definiert sind.

Optional kann die elastomere Schicht bzw. lasergravierbare Schicht reaktive niedermolekulare oder oligomere Verbindungen umfassen. Oligomere Verbindungen weisen im Allgemeinen ein Molekulargewicht von nicht mehr als 20.000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von Bindemitteln aus der ersten und zweiten Gruppe ist der Zusatz von Monomeren zur Beschleunigung im Allgemeinen nicht zwingend notwendig. Bei Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt von geeigneten Monomeren mindestens 150°C. Besonders geeignet sind Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen n-Butylacrylat, 2-Ethylhexylacrylat, Laurylacrylat, 1,4-Butandioldi(meth)acrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4-Butandiol, 1,6-Hexandiol, 1,8-Octandiol, 1,9-Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen ω-Hydroxyalkyl(meth)acrylate genannt, wie beispielsweise Ethylenglykolmono(meth)acrylat, 1,4-Butandiolmono(meth)acrylat oder 1,6-Hexandiolmono(meth)acrylat.

Selbstverständlich können auch Gemische verschiedener Monomerer eingesetzt werden, vorausgesetzt die Eigenschaften der elastomeren Schicht werden durch die Mischung nicht negativ beeinflusst. Im Regelfalle beträgt die Menge zugesetzter Monomere 0 bis 40 Gew.-% bezüglich der Menge aller Bestandteile der elastomeren Schicht bzw. der betreffenden lasergravierbaren Schicht, bevorzugt 1 bis 20 Gew.-%.

In einer Ausführungsform kann man ein oder mehrere Monomere mit einem oder mehreren Katalysatoren einsetzen. So ist es möglich, Silikonmatrizen durch Zugabe von einer oder mehrerer Säuren oder durch Organozinnverbindungen den Schritt 2) der Bereitstellung der Silikonmatrize zu beschleunigen. Geeignete Organozinnverbindungen können sein: Di-n-butylzinndilaureat, Di-n-butylzinndiactanoat, Di-n-butylzinndi-2-ethylhexanoat, Di-n-octylzinndi-2-ethylhexanoat und Di-n-butylbis(1-oxoneodecyloxy)stannan.

Die elastomere Schicht bzw. die lasergravierbare Schicht kann weiterhin Zusatz- und Hilfsstoffe wie beispielsweise IR-Absorber, Farbstoffe, Dispergierhilfsmittel, Antistatika, Weichmacher oder abrasive Partikel umfassen. Die Menge derartiger Zusatz- und Hilfsstoffe sollte im Regelfalle 30 Gew.-% bezüglich der Menge aller Komponenten der elastomeren Schicht bzw. der betreffenden lasergravierbaren Schicht nicht überschreiten.

Die elastomere Schicht bzw. die lasergravierbare Schicht kann aus mehreren Einzelschichten aufgebaut werden. Diese Einzelschichten können von gleicher, in etwa gleicher oder von unterschiedlicher stofflicher Zusammensetzung sein. Die Dicke der lasergravierbaren Schicht bzw. aller Einzelschichten zusammen beträgt im Regelfalle zwischen 0,1 und 10 mm, bevorzugt 0,5 bis 3 mm. Die Dicke kann man abhängig von anwendungstechnischen und maschinentechnischen Prozessparametern des Lasergravurvorgangs und des Abformvorgangs geeignet auswählen.

Die elastomere Schicht bzw. die lasergravierbare Schicht kann optional weiterhin eine Oberschicht mit einer Dicke von nicht mehr als 300 µm aufweisen. Die Zusammensetzung einer solchen Oberschicht kann man im Hinblick auf optimale Gravierbarkeit und mechanische Stabilität auswählen, während die Zusammensetzung der darunter liegenden Schicht im Hinblick auf optimale Härte oder Elastizität ausgewählt wird.

In einer Ausführungsform der vorliegenden Erfindung ist die Oberschicht selbst lasergravierbar oder im Zuge der Lasergravur zusammen mit der darunter liegenden Schicht entfernbar. Die Oberschicht umfasst mindestens ein Bindemittel. Sie kann weiterhin einen Absorber für Laserstrahlung oder auch Monomere oder Hilfsmittel umfassen.

In einer Ausführungsform der vorliegenden Erfindung handelt es sich bei der Silikonmatrize um eine mit Hilfe von Lasergravur strukturierte Silikonmatrize.

In einer Ausführungsform der vorliegenden Erfindung handelt es sich bei der Matrize um ein Silikonband, das lang genug ist, dass die Schritte des erfindungsgemäßen Verfahrens an diesem Silikonband durchgeführt werden können.

Von ganz besonderem Vorteil werden für das erfindungsgemäße Verfahren thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 0 084 851 offenbart. Auf diese Art und Weise lassen sich auch dickere Schichten in einem einzigen Arbeitsgang herstellen. Mehrschichtige Elemente können mittels Coextrusion hergestellt werden.

Wünscht man ein Medium mit Hilfe von Lasergravur zu strukturieren, so ist es bevorzugt, die entsprechende lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Trägermaterial (A) verbindbare Beschichtung direkt durch Auftragen eines flüssigen Kunststoffmaterials auf die Oberfläche der Matrize und anschließender Verfestigung des Polyurethans erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden im das strukturierten Medium Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass es Näpfchen (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauhigkeit im Bereich von 1 bis 20 µm, besonders bevorzugt 2 bis 15 µm und besonders bevorzugt 3 bis 10 µm.

Zur Lasergravur eigenen sich insbesondere IR-Laser, beispielsweise CO₂-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Laser können entweder kontinuierlich oder gepulst betrieben werden.

In vielen Fällen kann das erhaltene strukturierte Medium nach der Herstellung direkt eingesetzt werden. Falls gewünscht, kann das erhaltene strukturierte Medium noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten organischen Reinigungsmitteln ausreichend, die vorzugsweise quellungsarm sind.

Die Matrize wird in eine Vorrichtung überführt, in der man das erfindungsgemäße Verfahren durchzuführen wünscht. Die Vorrichtung umfasst ein oder mehrere Mittel, mit deren Hilfe
- man vorzugsweise wässrige Polyurethandispersion auf die Matrize applizieren, insbesondere aufsprühen kann,
- man gegebenenfalls Material, das sich durch Aushärten in Verbindungsschicht (B) umwandelt, auf Polyurethanschicht (C) und/oder Trägermaterial (A) aufbringen kann,
- man gegebenenfalls mit einem Material, das sich zu Verbindungsschicht (B) umwandelt, versehenes Trägermaterial (A) auf Polyurethanschicht (C) transferieren kann,
- man Trägermaterial (A), Material, das sich zu Verbindungsschicht (B) umwandelt, und Polyurethanschicht (C) miteinander fixieren kann, beispielsweise thermisch, durch aktinische Strahlung oder durch Druck oder durch eine Kombination von mindestens zwei der vorstehend genannten Methoden, und/oder
- man den so hergestellten mehrschichtigen Verbundkörper ablösen kann.

In einem weiteren Schritt bringt man eine wässrige Formulierung von Polyurethan auf die Matrize auf. Das Aufbringen kann vorzugsweise durch Aufsprühen erfolgen. Die Matrize sollte erwärmt sein, wenn man die Formulierung von Polyurethan aufbringt, beispielsweise auf Temperaturen von mindestens 80°C, bevorzugt mindestens 90°C. Das Wasser aus der vorzugsweise wässrigen Formulierung von Polyurethan verdampft vorzugsweise schlagartig, insbesondere schneller als innerhalb von 5 Sekunden, ganz besonders bevorzugt bis zum nächsten Arbeitsschritt, und kann die Bildung von Kapillaren in der sich verfestigenden Polyurethanschicht fördern oder verursachen.

Unter wässrig wird im Zusammenhang mit der Polyurethandispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

Die wässrige Polyurethandispersion kann einen Feststoffgehalt im Bereich von 5 bis 60 Gew.-% auf, bevorzugt 10 bis 50 Gew.-% und besonders bevorzugt 25 bis 45 Gew.-% aufweisen.

Polyurethane (PU) sind allgemein bekannt, kommerziell erhältlich und bestehen im allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im allgemeinen werden Polyurethane (PU) durch Umsetzung von
(a) Isocyanaten, bevorzugt Diisocyanaten mit
(b) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(c) Kettenverlängerungsmitteln mit einem Molekulargewicht von 50 bis 499 g/mol gegebenenfalls in Gegenwart von
(d) Katalysatoren
(e) und/oder üblichen Zusatzstoffen hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (a), (b), (c) sowie gegebenenfalls (d) und/oder (e) sollen im Folgenden beispielhaft beschrieben werden:
Als Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1 ,4, 1 -Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 und 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (b), insbesondere zur Herstellung von weichen Polyurethanen Polyurethan (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (b) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

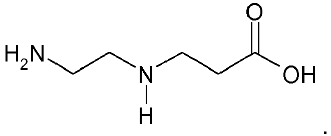

Als Kettenverlängerungsmittel (c) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (c) eingesetzt werden können.

Besonders bevorzugt handelt es sich bei den Komponenten (a) bis (c) um difunktionelle Verbindungen, d.h. Diisocyanate (a), difunktionelle Polyole, bevorzugt Polyetherole (b) und difunktionelle Kettenverlängerungsmittel, bevorzugt Diole.

Geeignete Katalysatoren (d), welche insbesondere die Reaktion zwischen den NCO-Gruppen der Diisocyanate (a) und den Hydroxylgruppen der Aufbaukomponenten (b) und (c) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (b) eingesetzt.

Neben Katalysator (d) können den Komponenten (a) bis (c) auch Hilfsmittel und/oder Zusatzstoffe (e) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (e) auch Gemische von zwei oder mehr Antioxidantien verwendet werden.

Neben den genannten Komponenten (a), (b) und (c) und gegebenenfalls (d) und (e) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c).

Neben den genannten Komponenten (a), (b) und (c) und gegebenenfalls (d) und (e) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (b) und (c) in relativ breiten molaren Verhältnissen gewählt werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der weichen Polyurethane mit zunehmendem Gehalt an (c) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane Polyurethan (PU1) und Polyurethan (PU2) auf, von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen, jedoch wählt man andere gegenüber Isocyanaten reaktiven Verbindungen (b) oder andere Mischungen von gegenüber Isocyanaten reaktiven Verbindungen (b), im Rahmen der vorliegenden Erfindung auch als gegenüber Isocyanaten reaktiven Verbindungen (b2) oder kurz Verbindung (b2) bezeichnet.

Beispiele für Verbindungen (b2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (a) und Polyurethan (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 s bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich im Bereich von 100 bis 300 nm, bevorzugt 120 bis 150 nm auf, bestimmt durch Laserlichtstreuung.

Die wässrige Polyurethandispersion kann weiterhin mindestens einen Härter, der auch als Vernetzer bezeichnet werden kann, aufweisen. Als Härter sind Verbindungen geeignet, die mehrere Polyurethanmoleküle miteinander vernetzen können, beispielsweise bei thermischer Aktivierung. Besonders geeignet sind Vernetzer auf Basis von trimeren Diisocyanaten, insbesondere auf Basis von aliphatischen Diisocyanaten wie Hexamethylendiisocyanat. Ganz besonders bevorzugt sind Vernetzer der Formel I a oder I b, im Rahmen der vorliegenden Erfindung auch kurz Verbindung (V) genannt, 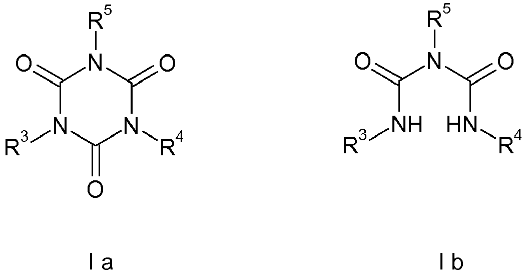 wobei R³, R⁴ und R⁵ verschieden oder vorzugsweise gleich sein können und gewählt werden aus A¹-NCO und A¹-NH-CO-X, wobei
- A¹: ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-,-(CH₂)₅-, -(CH₂)₆-, -(CH₂)₈-, -(CH₂)₁₀-, -(CH₂)₁₂-.
- X: gewählt wird aus O(AO)ₓR⁶, wobei
- AO: ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH3)O),
- x: ist eine ganze Zahl im Bereich von 1 bis 50, bevorzugt 5 bis 25, und
- R⁶: ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Verbindungen (V) sind solche, bei denen R³, R⁴ und R⁵ jeweils gleich (CH₂)₄-NCO, (CH₂)₆-NCO oder (CH₂)₁₂-NCO sind.

Wässrige Polyurethandispersionen können weitere Bestandteile enthalten, beispielsweise
(f) eine Silikonverbindung mit reaktiven Gruppen,
im Rahmen der vorliegenden Erfindung auch Silikonverbindung (f) genannt.

Beispiele für reaktive Gruppen im Zusammenhang mit Silikonverbindungen (f) sind beispielsweise Carbonsäuregruppen, Carbonsäurederivate wie beispielsweise Carbonsäuremethylester oder Carbonsäureanhydride, insbesondere Bernsteinsäureanhydridgruppen, und besonders bevorzugt Carbonsäuregruppen.

Beispiele für reaktive Gruppen sind weiterhin primäre und sekundäre Aminogruppen, beispielsweise NH(iso-C₃H₇)-Gruppen, NH(n-C₃H₇)-Gruppen, NH(cyclo-C₆H₁₁)-Gruppen und NH(n-C₄H₉)-Gruppen, insbesondere NH(C₂H₅)-Gruppen und NH(CH₃)-Gruppen, und ganz besonders bevorzugt NH₂-Gruppen.

Weiterhin sind Aminoalkylaminogruppen bevorzugt wie beispielsweise -NH-CH₂-CH₂-NH₂-Gruppen, -NH-CH₂-CH₂-CH₂-NH₂-Gruppen, -NH-CH₂-CH₂-NH(C2H₅)-Gruppen, -NH-CH₂-CH₂-CH₂-NH(C2H₅)-Gruppen, -NH-CH₂-CH₂-NH(CH₃)-Gruppen, -NH-CH₂-CH₂-CH₂-NH(CH₃)-Gruppen.

Die reaktive Gruppe bzw. die reaktiven Gruppen sind an Silikonverbindung (f) entweder direkt oder vorzugsweise über einen Spacer A² gebunden. A² wird gewählt aus Arylen, unsubstituiert oder substituiert mit einer bis vier C₁-C₄-Alkylgruppen, Alkylen und Cycloalkylen wie beispielsweise 1,4-Cyclohexylen. Bevorzugte Spacer A² sind Phenylen, insbesondere para-Phenylen, weiterhin Toluylen, insbesondere para-Toluylen, und C₂-C₁₈-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-, -(CH₂)₁₄-, -(CH₂)₁₆- und -(CH₂)₁₈-.

Zusätzlich zu den reaktiven Gruppen enthält Silikonverbindung (f) nicht-reaktive Gruppen, insbesondere Di-C₁-C₁₀-alkyl-SiO₂-Gruppen oder Phenyl-C₁-C₁₀-Alkyl-SiO₂-Gruppen, insbesondere Dimethyl-SiO₂-Gruppen, und gegebenenfalls eine oder mehrere Si(CH₃)₂-OH-Gruppen oder Si(CH₃)₃-Gruppen.

In einer Ausführungsform der vorliegenden Erfindung weist Silikonverbindung (f) im Mittel ein bis vier reaktive Gruppen pro Molekül auf.

In einer speziellen Ausführungsform der vorliegenden Erfindung weist Silikonverbindung (f) im Mittel ein bis vier COOH-Gruppen pro Molekül auf.

In einer anderen speziellen Ausführungsform der vorliegenden Erfindung weist Silikonverbindung (f) im Mittel ein bis vier Aminogruppen oder Aminoalkylaminogruppen pro Molekül auf.

Silikonverbindung (f) weist kettenförmig oder verzweigt angeordnete Si-O-Si-Einheiten auf.

In einer Ausführungsform der vorliegenden Erfindung weist Silikonverbindung (f) ein Molekulargewicht Mₙ im Bereich von 500 bis 10.000 g/mol auf, bevorzugt bis 5.000 g/mol.

Wenn Silikonverbindung (f) mehrere reaktive Gruppen pro Molekül aufweist, so können diese reaktiven Gruppen - direkt oder über Spacer A² - über mehrere Si-Atome oder paarweise über dasselbe Si-Atom an der Si-O-Si-Kette gebunden sein.

Die reaktiven Gruppen bzw. die reaktive Gruppe kann an einem oder mehreren der terminalen Si-Atome von Silikonverbindung (f) - direkt oder über Spacer A² - gebunden sein. In einer anderen Ausführungsform der vorliegenden Erfindung ist die reaktive Gruppe bzw. sind die reaktiven Gruppen an einem oder mehreren der nicht terminalen Si-Atome von Silikonverbindung (f) - direkt oder über Spacer A² - gebunden.

In einer Ausführungsform der vorliegenden Erfindung enthält wässrige Polyurethan-dispersion weiterhin
ein Polydi-C₁-C₄-Alkylsiloxan (g), das weder Aminogruppen noch COOH-Gruppen aufweist, vorzugsweise ein Polydimethylsiloxan, im Rahmen der vorliegenden Erfindung auch kurz Polydialkylsiloxan (g) bzw. Polydimethylsiloxan (g) genannt.

Dabei kann C₁-C₄-Alkyl in Polydialkylsiloxan (g) verschieden oder vorzugsweise gleich sein und gewählt aus Methyl, Ethyl, n-Propyl, iso-Propyl, n-Butyl, iso-Butyl, sec.-Butyl und tert.-Butyl, wobei unverzweigtes C₁-C₄-Alkyl bevorzugt ist, besonders bevorzugt ist Methyl.

Bei Polydialkylsiloxan (g) und vorzugsweise bei Polydimethylsiloxan (g) handelt es sich vorzugsweise um unverzweigte Polysiloxane mit Si-O-Si-Ketten oder um solche Polysiloxane, die bis zu 3, bevorzugt maximal eine Verzweigung pro Molekül aufweisen.

Polydialkylsiloxan (D) und insbesondere Polydimethylsiloxan (g) kann eine oder mehrere Si(C₁-C₄-Alkyl)₂-OH-Gruppen aufweisen.

In einer Ausführungsform der vorliegenden Erfindung enthält wässrige Polyurethan-dispersion
insgesamt im Bereich von 20 bis 30 Gew.-% Polyurethan (PU), bzw. insgesamt im Bereich von 20 bis 30 Gew.-% Polyurethane (PU1) und (PU2),
im Bereich von 1 bis 10, bevorzugt 2 bis 5 Gew.-% Härter,
im Bereich von 1 bis 10 Gew.-% Silikonverbindung (f),
im Bereich von null bis 10, bevorzugt 0,5 bis 5 Gew.-% Polydialkylsiloxan (g).

In einer Ausführungsform der vorliegenden Erfindung enthält wässrige Polyurethan-dispersion
im Bereich von 10 bis 30 Gew.-% weiches Polyurethan (PU1) und
im Bereich von null bis 20 Gew.-% hartes Polyurethan (PU2).

In einer Ausführungsform der vorliegenden Erfindung weist erfindungsgemäße wässrige Dispersion einen Feststoffgehalt von insgesamt 5 bis 60 Gew.-% auf, bevorzugt 10 bis 50 Gew.-% und besonders bevorzugt 25 bis 45 Gew.-%.

Dabei bezeichnen Angaben in Gew.-% jeweils den Wirkstoff bzw. Feststoff und sind auf die gesamte erfindungsgemäße wässrige Dispersion bezogen. Der zu 100 Gew.-% fehlende Rest ist vorzugsweise kontinuierliche Phase, beispielsweise Wasser oder ein Gemisch von einem oder mehreren organischen Lösemitteln und Wasser.

In einer Ausführungsform der vorliegenden Erfindung enthält wässrige Polyurethan-dispersion mindestens einen Zusatz (h), gewählt aus Pigmenten, Mattierungsmitteln, Lichtschutzmitteln, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält wässrige Polyurethan-dispersion insgesamt bis zu 20 Gew.-% an Zusätzen (h).

Wässrige Polyurethandispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

Zur Herstellung von wässrigen Polyurethandispersionen kann man Polyurethan (PU), Härter und Silikonverbindung (f) mit Wasser und gegebenenfalls einem oder mehreren der vorstehend genannten organischen Lösemittel vermischen. Weiterhin vermischt man, falls gewünscht, mit Polydialkylsiloxan (g) und Zusätzen (h). Das Vermischen kann man beispielsweise durch Verrühren durchführen. Dabei ist die Reihenfolge der Zugabe von Polyurethan (PU), Härter, Silikonverbindung (f) und Wasser und gegebenenfalls einem oder mehreren der vorstehend genannten organischen Lösemittel sowie - falls gewünscht - Polydialkylsiloxan (g) und Zusätzen (h) beliebig.

Bevorzugt geht man von einem in Wasser oder einem Gemisch aus Wasser und organischem Lösemittel dispergierten Polyurethan (PU) oder von dispergiertem weichem Polyurethan (PU1) und hartem Polyurethan (PU2) aus und gibt, vorzugsweise unter Rühren, Härter und Silikonverbindung (f) sowie, falls gewünscht, Polydialkylsiloxan (g) und gegebenenfalls ein oder mehrere organische Lösemittel zu. Vorzugsweise unterlässt man jedoch die Zugabe von organischem Lösemittel.

In einer speziellen Ausführungsform gibt man Verdickungsmittel als Beispiel für einen Zusatz (h) als letztes zu und stellt so die gewünschte Viskosität der wässrigen Polyurethandispersion ein.

In einem weiteren Arbeitsgang des erfindungsgemäßen Herstellverfahrens bringt man vorzugsweise organischen Klebstoff auf Polyurethanfilm (C) und/oder Trägermaterial (A) auf.

In einer Variante trägt man vorzugsweise organischen Klebstoff nicht vollflächig auf, sondern beispielsweise in Form von Punkten oder Streifen oder durch Aufsprühen.

In einer anderen Variante trägt man vorzugsweise organischen Klebstoff vollflächig auf, beispielsweise per Rollercoater oder durch Rakeln.

In einer Variante der vorliegenden Erfindung bringt man einen vorzugsweise organischen Klebstoff auf Polyurethanfilm (C) und einen vorzugsweise organischen Klebstoff auf Trägermaterial (A) auf, wobei sich die beiden Klebstoffe unterscheiden, beispielsweise durch einen oder mehrere Zusätze oder dadurch, dass es sich um chemisch verschiedene vorzugsweise organische Klebstoffe handelt. Anschließend verbindet man Polyurethanfilm (C) und Trägermaterial (A), und zwar so, dass die Schicht(en) von Klebstoff zwischen Polyurethanfilm (C) und Trägermaterial (A) zu liegen kommen. Man härtet den Klebstoff bzw. die Klebstoffe aus, beispielsweise thermisch, durch aktinische Strahlung oder durch Alterung, und erhält erfindungsgemäßes mehrschichtiges Verbundmaterial.

In einem weiteren Arbeitsgang kann man mechanisch Druck auf die zusammengeführten Bestandteile Polyurethanfilm (C), Trägermaterial (A) und Verbindungsschicht (B) bzw. Material, dass sich zu Verbindungsschicht (B) umwandeln kann, aus, beispielsweise durch Verpressen. Das Verpressen kann zum Beispiel halbkontinuierlich durch Stempelpressen oder kontinuierlich durch Rollenpressen (Kalander) passieren.

In einer Ausführungsform der vorliegenden Erfindung verpresst man mit einem Stempeldruck oder Rollendruck im Bereich von 1 bis 10 bar

Bevorzugt handelt es sich bei den Stempelpressen bzw. Rollenpressen um beheizte Elemente. In einer Ausführungsform wird durch das Verpressen auch Wärmeenergie eingetragen, so dass Material, das thermisch zu Verbindungsschicht (B) umgewandelt wird, einer Temperatur von 75 bis 120°C, bevorzugt mindestens 80°C ausgesetzt wird.

In einer Ausführungsform der vorliegenden Erfindung übt man den Druck über eine Zeit im Bereich von 5 Sekunden bis 5 Minuten aus, bevorzugt im Bereich von 10 bis 30 Sekunden und ganz besonders bevorzugt etwa 20 Sekunden.

In einer Ausführungsform der vorliegenden Erfindung kann erfindungsgemäß hergestelltes mehrschichtiges Verbundmaterial keine weiteren Schichten aufweisen.

In einer anderen Ausführungsform der vorliegenden Erfindung kann erfindungsgemäß hergestelltes mehrschichtiges Verbundmaterial mindestens eine Zwischenschicht (D) umfassen, die zwischen Trägermaterial (A) und Verbindungsschicht (B), zwischen Verbindungsschicht (B) und Polyurethanschicht (C) oder zwischen zwei Verbindungsschichten (B), die gleich oder verschieden sein können, liegt. Dabei wird Zwischenschicht (D) gewählt aus Textil, Papier, Vliesstoffen, und Vliesstoffen (Non-wovens) aus synthetischen Materialien wie Polypropylen oder Polyurethan, insbesondere Non-wovens aus thermoplastischem Polyurethan. Das Material von Zwischenschicht (D) wird dabei so gewählt, dass es verschieden ist von Trägermaterial (A).

In den Ausführungsformen, in denen erfindungsgemäß hergestelltes mehrschichtiges Verbundmaterial mindestens eine Zwischenschicht (D) aufweist, kommt Polyurethanschicht (C) vorzugsweise nicht direkt mit Trägermaterial (A) in Berührung, sondern mit Zwischenschicht (D).

In einer Ausführungsform der vorliegenden Erfindung kann Zwischenschicht (D) einen mittleren Durchmesser (Dicke) im Bereich von 0,05 mm bis 5 cm, bevorzugt 0,1 mm bis 0,5 cm, besonders bevorzugt 0,2 mm bis 2 mm aufweisen.

Vorzugsweise weist Zwischenschicht (D) eine Wasserdampfdurchlässigkeit im Bereich von größer als 1,5 mg/cm²·h auf, gemessen nach DIN 53333.

In einer Ausführungsform der vorliegenden Erfindung platziert man eine Zwischenschicht (D) zwischen Trägermaterial (A) und Verbindungsschicht (B), zwischen Verbindungsschicht (B) und Polyurethanschicht (C) oder zwischen zwei Verbindungsschichten (B).

Die Zwischenschicht (D) ist wie vorstehend definiert.

Das Platzieren kann manuell oder maschinell erfolgen, kontinuierlich oder diskontinuierlich.

Erfindungsgemäß hergestellte mehrschichtige Verbundmaterialien weisen eine hohe mechanische Festigkeit und Echtheiten auf. Weiterhin weisen sie eine hohe Wasserdampfdurchlässigkeit auf. Tropfen von verschütteter Flüssigkeit können leicht entfernt werden, beispielsweise mit einem Lappen. Außerdem weisen erfindungsgemäße mehrschichtige Verbundmaterialien ein gefälliges Aussehen und einen sehr angenehmen weichen Griff auf.

Vorteilhaft ist die Anwendung von erfindungsgemäß hergestelltem mehrschichtigem Verbundmaterial beispielsweise im Innenraum von Fahrzeugen, beispielsweise in Dachhimmeln, Armaturenbrettern, Sitzen, Griffen, Lenkrädern, Innenraum-Verkleidungsstücken und Mittelkonsolen. Weiterhin ist die Anwendung von erfindungsgemäß hergestellten mehrschichtigen Verbundmaterialien für Verpackungsmaterialien, beispielsweise Zier- und Dekorationsverpackungen, sowie für Dekorationsmaterialien vorteilhaft. Weiterhin ist die Anwendung vorteilhaft für Bekleidungsstücke wie Mäntel oder Jacken oder Schuhe.

In einer Ausführungsform der vorliegenden Erfindung werden erfindungsgemäß hergestellte mehrschichtige Verbundmaterialien vorteilhaft angewendet in aufwändigen Druckerzeugnissen wie Broschüren, Prospekten, Katalogen, insbesondere in Jahresberichten und in Büchern, beispielsweise in Bucheinbänden.

Weiterhin lassen sich erfindungsgemäß hergestellte mehrschichtige Verbundmaterialien vorteilhaft in der Innenarchitektur verwenden, beispielsweise zum Kaschieren von Möbeln.

Ein weiterer Gegenstand der vorliegenden Erfindung sind Vorrichtungen, die zur Durchführung des erfindungsgemäßen Verfahrens geeignet sind. Erfindungsgemäße Vorrichtungen umfassen in einer Ausführungsform

eine Matrize, bevorzugt eine Silikonmatrize, die einen Wärmeträger mit einer Wärmekapazität im Bereich von 100 bis 20.000 J/K·m² umfasst, auf mindestens zwei Rollen, die so angebracht sind, dass sie die Matrize in einer Endlos-Schleife drehen können,

mindestens eine Applikationsvorrichtung, mit der vorzugsweise wässrige Polyurethan-dispersion auf die Matrize aufgebracht, vorzugsweise gesprüht werden kann, wobei die wässrige Polyurethandispersion eine Polyurethanschicht (C) ausbildet,

gegebenenfalls mindestens eine Applikationsvorrichtung, mit der man Material, das sich durch Aushärten in Verbindungsschicht (B) umwandelt, aufbringen und insbesondere aufsprühen kann,

mindestens eine Einheit, mit der Trägermaterial (A), welches mit einem Material versehen sein kann, das sich zu Verbindungsschicht (B) umwandelt, auf Polyurethanschicht (C) transferiert wird,

eine Einheit, die Trägermaterial (A), Material, das sich zu Verbindungsschicht (B) umwandelt, und Polyurethanschicht (C) miteinander fixiert, beispielsweise thermisch, durch aktinische Strahlung oder durch Druck oder einer Kombination von mindestens zwei der vorstehend genannten Methoden,

eine Einrichtung zum Ablösen des erfindungsgemäß hergestellten mehrschichtigen Verbundkörpers.

gegebenenfalls eine Einheit, die Material, das sich zu Verbindungsschicht (B) umwandeln kann, auf Polyurethanschicht (C) aufbringt.

Bei vorstehend genannter Applikationsvorrichtung kann es sich beispielsweise um eine Sprühdüse handeln, die mit mindestens einem Vorratsgefäß für Formulierung von Polyurethan verbunden ist.

Bei einer Einheit, die Trägermaterial (A), Material, das sich zu Verbindungsschicht (B) umwandelt, und Polyurethanschicht (C) miteinander durch Druck fixiert, kann es sich um mindestens zwei gegenläufige Rollen handeln.

In einer Ausführungsform der vorliegenden Erfindung handelt es sich bei der Matrize um ein Silikonband, das lang genug ist, um an allen vorstehend genannten Einheiten und Einrichtungen vorbeizuführen bzw. vorbei geführt zu werden, so dass die Schritte des erfindungsgemäßen Verfahrens an diesem Silikonband durchgeführt werden können.

In einer Ausführungsform der vorliegenden Erfindung umfassen erfindungsgemäße Vorrichtungen an sich bekannte Mess- und Regeleinrichtungen.

Ein weiterer Gegenstand der vorliegenden Erfindung ist die Verwendung von erfindungsgemäßen Vorrichtungen zur Durchführung des erfindungsgemäßen Verfahrens.

## Patentansprüche

1. Verfahren zur kontinuierlichen Herstellung von mehrschichtigen Verbundkörpern, umfassend
(A) mindestens ein Trägermaterial,
(B) mindestens eine Verbindungsschicht und
(C) mindestens eine Polyurethanschicht, die Kapillaren aufweist, die über die gesamte Dicke der Polyurethanschicht gehen,
**dadurch gekennzeichnet, dass** man mit Hilfe einer Matrize Polyurethanschicht (C) herstellt und diese Polyurethanschicht (C) mit Hilfe eines Materials, das sich zu Verbindungsschicht (B) umwandelt, auf dem Trägermaterial (A) fixiert, wobei die Matrize eine Temperatur im Bereich von 80 bis 170°C aufweist und eine Wärmekapazität im Bereich von 100 bis 20.000 J/K·m² hat und wobei die Matrize als Endlos-Band ausgebildet ist, welches über Rollen an verschiedenen Apparateteilen vorbeigeführt wird, an denen die betreffenden Arbeitsschritte durchgeführt werden.

2. Verfahren nach Anspruch 1, **dadurch gekennzeichnet, dass** es sich bei den Verbundkörpern um atmungsaktive Verbundkörper handelt.

3. Verfahren nach Anspruch 1 oder 2, **dadurch gekennzeichnet, dass** es sich bei der Matrize um eine Silikonmatrize oder ein mit Silikon überzogenes Material handelt.

4. Verfahren nach einem der Ansprüche 1 bis 3, **dadurch gekennzeichnet, dass** die Matrize einen Wärmeträger umfasst.

5. Verfahren nach Anspruch 4, **dadurch gekennzeichnet, dass** Wärmeträger gewählt werden aus geheizten Metallkörpern und Metallkörpern mit hoher Wärmekapazität.

6. Verfahren nach Anspruch 4 oder 5, **dadurch gekennzeichnet, dass** es sich bei dem Wärmeträger um Metall handelt, welches in eine Matrize integriert ist.

7. Verfahren nach einem der Ansprüche 1 bis 6, **dadurch gekennzeichnet, dass** Polyurethanschicht (C) aus mindestens zwei Polyurethanen zusammengesetzt ist.

8. Verfahren nach einem der Ansprüche 1 bis 7, **dadurch gekennzeichnet, dass** Trägermaterial (A) gewählt wird aus Leder, Kunstleder, Metall-oder Kunststofffolien, Textil und zellulosehaltigen Materialien.

9. Verfahren nach einem der Ansprüche 1 bis 8, **dadurch gekennzeichnet, dass** man mindestens eine Zwischenschicht (D) kontinuierlich einfügt, wobei das Material, aus dem die Zwischenschicht (D) besteht, verschieden ist von Trägermaterial (A).

10. Verfahren nach einem der Ansprüche 1 bis 9, **dadurch gekennzeichnet, dass** man Polyurethanschicht (C) mit Hilfe von mindestens einer wässrigen Formulierung von mindestens einem Polyurethan herstellt.

11. Vorrichtungen, umfassend
eine Matrize, die zusammen mit einem gegebenenfalls vorhandenen Wärmeträger eine Wärmekapazität im Bereich von 100 bis 20.000 J/K·m² umfasst, auf mindestens zwei Rollen, die so angebracht sind, dass sie die Matrize in einer Endlos-Schleife drehen können,
mindestens eine Applikationsvorrichtung, mit der Polyurethandispersion auf die Matrize gesprüht werden kann, wobei die wässrige Polyurethandispersion eine Polyurethanschicht (C) ausbildet,
mindestens eine Einheit, mit der Trägermaterial (A), welches mit einem Material versehen sein kann, das beim Aushärten Verbindungsschicht (B) ausbildet, auf Polyurethanschicht (C) transferiert wird,
eine Einheit, die Trägermaterial (A), Material, welches Verbindungsschicht (B) ausbildet, und Polyurethanschicht (C) miteinander fixiert,
eine Einrichtung zum Ablösen des erfindungsgemäß hergestellten mehrschichtigen Verbundkörpers,
gegebenenfalls eine Einheit, die Material, das sich zu Verbindungsschicht (B) umwandeln kann, auf Polyurethanschicht (C) aufbringt.

12. Verwendung von Vorrichtungen nach Anspruch 11 zur Durchführung eines Verfahrens nach einem der Ansprüche 1 bis 10.

## Claims

1. Process for continuous production of multilayered composite articles, comprising
(A) at least one carrier material,
(B) at least one joining layer and
(C) at least one polyurethane layer comprising capillaries extending through the entire thickness of the polyurethane,
**characterized in that** polyurethane layer (C) is produced using a mould and this polyurethane layer (C) is secured to the carrier material (A) using a material that is converted into joining layer (B), wherein the mould has a temperature in the range from 80°C to 170°C and has a heat capacity in the range from 100 to 20 000 J/K·m² and wherein the mould is in the form of an endless tape which using rollers is run past different apparatus parts at which the relevant process steps are performed.

2. Process according to Claim 1, **characterized in that** the composite articles are breathable composite articles.

3. Process according to Claim 1 or 2, **characterized in that** the mould is a silicone mould or a material coated with silicone.

4. Process according to any of Claims 1 to 3, **characterized in that** the mould comprises a heat transfer body.

5. Process according to Claim 4, **characterized in that** heat transfer bodies are selected from heated metal bodies and metal bodies having a high heat capacity.

6. Process according to Claim 4 or 5, **characterized in that** the heat transfer body is metal that is integrated into a mould.

7. Process according to any of Claims 1 to 6, **characterized in that** polyurethane layer (C) is composed of at least two polyurethanes.

8. Process according to any of Claims 1 to 7, **characterized in that** carrier material (A) is selected from leather, artificial leather, metal foils or plastic films, textile and cellulose-containing materials.

9. Process according to any of Claims 1 to 8, **characterized in that** at least one interlayer (D) is continuously introduced, wherein the material from which the interlayer (D) is made is distinct from the carrier material (A).

10. Process according to any of Claims 1 to 9, **characterized in that** polyurethane layer (C) is produced using at least one aqueous formulation of at least one polyurethane.

11. Apparatuses, comprising
a mould which together with an optionally present heat transfer body comprises a heat capacity in the range from 100 to 20 000 J/K_{·}m² on at least two rollers that are mounted such that they can turn the mould in an endless loop,
at least one application apparatus with which polyurethane dispersion may be sprayed onto the mould, wherein the aqueous polyurethane dispersion forms a polyurethane layer (C),
at least one unit with which carrier material (A) which may be provided with a material that forms joining layer (B) upon curing is transferred onto the polyurethane layer (C),
a unit that secures carrier material (A), material that fixes joining layer (B) and polyurethane layer (C) to one another,
a means for detaching the multilayered composite article produced according to the invention,
optionally a unit that applies material capable of conversion into joining layer (B) onto polyurethane layer (C) .

12. Use of apparatuses according to Claim 11 for performing a process according to any of Claims 1 to 10.

## Revendications

1. Procédé de fabrication continue de corps composites multicouches, comprenant :
(A) au moins un matériau support,
(B) au moins une couche de liaison et
(C) au moins une couche de polyuréthane, qui comprend des capillaires qui traversent l'épaisseur totale de la couche de polyuréthane,
**caractérisé en ce que** la couche de polyuréthane (C) est fabriquée à l'aide d'une matrice et cette couche de polyuréthane (C) est fixée sur le matériau support (A) à l'aide d'un matériau qui se transforme en la couche de liaison (B), la matrice présentant une température dans la plage allant de 80 à 170 °C et ayant une capacité calorifique dans la plage allant de 100 à 20 000 J/K·m² et la matrice étant configurée sous la forme d'une bande continue, qui passe sur des rouleaux devant différentes parties de l'appareil au niveau desquelles les étapes de travail correspondantes sont réalisées.

2. Procédé selon la revendication 1, **caractérisé en ce que** les corps composites consistent en des corps composites respirables.

3. Procédé selon la revendication 1 ou 2, **caractérisé en ce que** la matrice consiste en une matrice de silicone ou en un matériau revêtu avec de la silicone.

4. Procédé selon l'une quelconque des revendications 1 à 3, **caractérisé en ce que** la matrice comprend un caloporteur.

5. Procédé selon la revendication 4, **caractérisé en ce que** les caloporteurs sont choisis parmi les corps métalliques chauffés et les corps métalliques à capacité calorifique élevée.

6. Procédé selon la revendication 4 ou 5, **caractérisé en ce que** le caloporteur consiste en un métal qui est intégré dans une matrice.

7. Procédé selon l'une quelconque des revendications 1 à 6, **caractérisé en ce que** la couche de polyuréthane (C) est constituée par au moins deux polyuréthanes.

8. Procédé selon l'une quelconque des revendications 1 à 7, **caractérisé en ce que** le matériau support (A) est choisi parmi le cuir, le cuir artificiel, les films de métal ou de matière plastique, les textiles et les matériaux cellulosiques.

9. Procédé selon l'une quelconque des revendications 1 à 8, **caractérisé en ce qu'**au moins une couche intermédiaire (D) est insérée en continu, le matériau dont est constituée la couche intermédiaire (D) étant différent du matériau support (A).

10. Procédé selon l'une quelconque des revendications 1 à 9, **caractérisé en ce que** la couche de polyuréthane (C) est fabriquée à l'aide d'au moins une formulation aqueuse d'au moins un polyuréthane.

11. Dispositifs, comprenant :
une matrice, qui présente conjointement avec un caloporteur éventuellement présent une capacité calorifique dans la plage allant de 100 à 20 000 J/K·m², sur au moins deux rouleaux, qui sont disposés de telle sorte qu'ils puissent faire tourner la matrice en une boucle continue,
au moins un dispositif d'application avec lequel une dispersion de polyuréthane peut être pulvérisée sur la matrice, la dispersion de polyuréthane aqueuse formant une couche de polyuréthane (C),
au moins une unité avec laquelle un matériau support (A), qui peut être muni d'un matériau qui forme une couche de liaison (B) lors du durcissement, est transféré sur la couche de polyuréthane (C),
une unité qui fixe le matériau support (A), le matériau qui forme la couche de liaison (B) et la couche de polyuréthane (C) les uns avec les autres,
un appareil pour le décollement du corps composite multicouche fabriqué selon l'invention,
éventuellement une unité qui applique un matériau qui peut se transformer en la couche de liaison (B) sur la couche de polyuréthane (C).

12. Utilisation de dispositifs selon la revendication 11 pour la réalisation d'un procédé selon l'une quelconque des revendications 1 à 10.
